Europäisches Patentamt

European Patent Office

Office européen des brevets

(11) Publication number: 0 388 917
A1

# EUROPEAN PATENT APPLICATION

(21) Application number: 90105330.6

(22) Date of filing: 21.03.90

(51) Int. Cl.5: A61C 7/02

(30) Priority: 23.03.89 IT 1987789

(43) Date of publication of application:
26.09.90 Bulletin 90/39

(84) Designated Contracting States:
AT BE CH DE ES FR GB LI NL

(71) Applicant: OFFICINA MECCANICA D.S. S.D.F.
DI DRISALDI & STRAGIOTTI
Via Roma, 86
I-27025 Gambolo' (PV)(IT)

Applicant: OFFICINA MECCANICA COMAL
S.D.F. DI ROSA MASSIMO E LIBERO
Via Bracciano, 35
I-27029 Vigevano (PV)(IT)

(72) Inventor: Drisaldi,Giovanni
Via Gruvala 18
I-27025 Gambolo (PV)(IT)

(74) Representative: Dr. Ing. A. Racheli & C.
Viale San Michele del Carso, 4
I-20144 Milano(IT)

(54) Improved equipment for carrying out bends on wires for orthodontics.

(57) The proposed equipment comprises a vice (5) for the wire, joined to the head (3) of the equipment itself; a plurality of surfaces or faces (7a) each having a plurality of holes (9) positioned along the lines (10) which represent the required bending outlines, the said faces (7a) being located adjacent to the said vice (5); a tool (11), from the lower end of which projects a needle (11c), suitable for penetrating the said holes (9) and rotating in them, and a pawl (11d) positioned at a certain distance from the said needle (11c), so as to realize an air space into which the said wire can penetrate; a series of pegs (14) suitable for locking the bends in the wire once they are realized; particularly, the tool (11) has an internal hole made up of portions (11g, 11h), into which the needle (11c) is free to slide, and the pawl (11d) is provided with a radial projection (11n), turned towards the needle (11c).

The axial position of the pawl (11d) can be adjusted by acting on a dower (11i), while a magnet (11e) is located in the upper surface of the tool (11), to facilitate the extraction of the pegs (14) from the holes (9). The faces (7a), which bear the bending outlines, represent the side surfaces of a drum (7) capable of being rotated around a pin (6) projecting from the surface (3b) of the head (3) of the equipment, and its angular position can be clamped by means of an appropriate device.

FIG. 1

# IMPROVED EQUIPMENT FOR CARRYING OUT BENDS ON WIRES FOR ORTHODONTICS

The present invention relates to the realization of bends on harmonic steel wires used in orthodontics for making corrective applicances, which act on the teeth to bring them to the required condition. Particularly, it relates to the realization of first or second order bends, that is those made on a vertical plane (to which the wire which is not bent lies at right angles).

To straighten the teeth so that they are in alignment, forces are applied on them and on their roots by the use of a harmonic steel wire, or of steel for springs, which has a series of bends with a particular shape, characteristic of the corrective action required to be obtained on the teeth.

The bending of harmonic wires up to now has been carried out by hand, with the use of pliers; it is obvious that this process is long, difficult and expensive, as well as inaccurate. In addition, the bending obtained by folding the wire in the grip of the pliers may make nicks in the wire itself, which produce scratches and cuts when they come into contact with the patient's gum.

From Italian patent No. 1.193.940, filed on 29/5/1980 in the name of Drisaldi, Manetti et alia, equipment is known for bending harmonic wires for orthodontics, which is described together with the relative operative process. The equipment comprises a vice into which the wire is clamped, with its end protruding; this end is rested on a work plate, with a multiplicity of holes positioned following the bending outline required to be obtained. In addition it comprises a tool, consisting of a pin, near which a projection is located; the pin is inserted into the first of the holes provided in the work plate, so that the wire is inserted between the said pin and the side wall of the projection. The bending of the wire is carried out by rotating the head of the tool; the pin is then extracted for the hole, into which a peg is inserted to lock the bend which has been made. The operation is then repeated by inserting the pin into another hole, and so on.

The equipment described has, nevertheless, some drawbacks. First of all, each work plate has a pair of bending outlines at the most; this makes it necessary to have a large number of the said plates available, so as to be able to carry out a multiplicity of bends. Therefore it is often necessary to dismantle and remount the said plates onto the equipment, centring and aligning them correctly with respect to the equipment, which is a long, expensive operation.

Another disadvantage is that it is impossible to carry out closed or 360° bends, from which the wire comes out after making a complete circumference, and then overlaps the in-coming wire.

A last disadvantage lies in the fact that the pegs used for locking the bends in the relative holes are difficult to extract at the end of the wire bending operation: when they are extracted manually, it often happens that they fall and are lost.

The aim of the present invention is therefore to provide equipment for carrying out bends on wires for orthodontics which avoids the aforesaid drawbacks. This aim has been achieved by foreseeing equipment according to the enclosed claims from 1 to 6.

The present invention will now be described more clearly with reference to the enclosed drawings, in which:

figure 1 shows an exploded axonometric view of the equipment, object of the present invention;

figure 2 shows a view of the equipment in figure 1, taken in the direction of the arrow 2 shown in figure 1;

figure 2a shows a side view of the eccentric pin making up part of the equipment in figure 1;

figure 3 shows a detail of the top view of the rotating support for bending outlines making up part of the equipment in figure 1;

figure 4a, 4b, 4c, and 4d respectively show a side view, a view from below, a top view and a longitudinal sectional view taken along the line 4d-4d in figure 4b, of the bending tool making up part of the equipment in figure 1;

figure 5 shows a side view of a bend locking peg making up part of the equipment in figure 1.

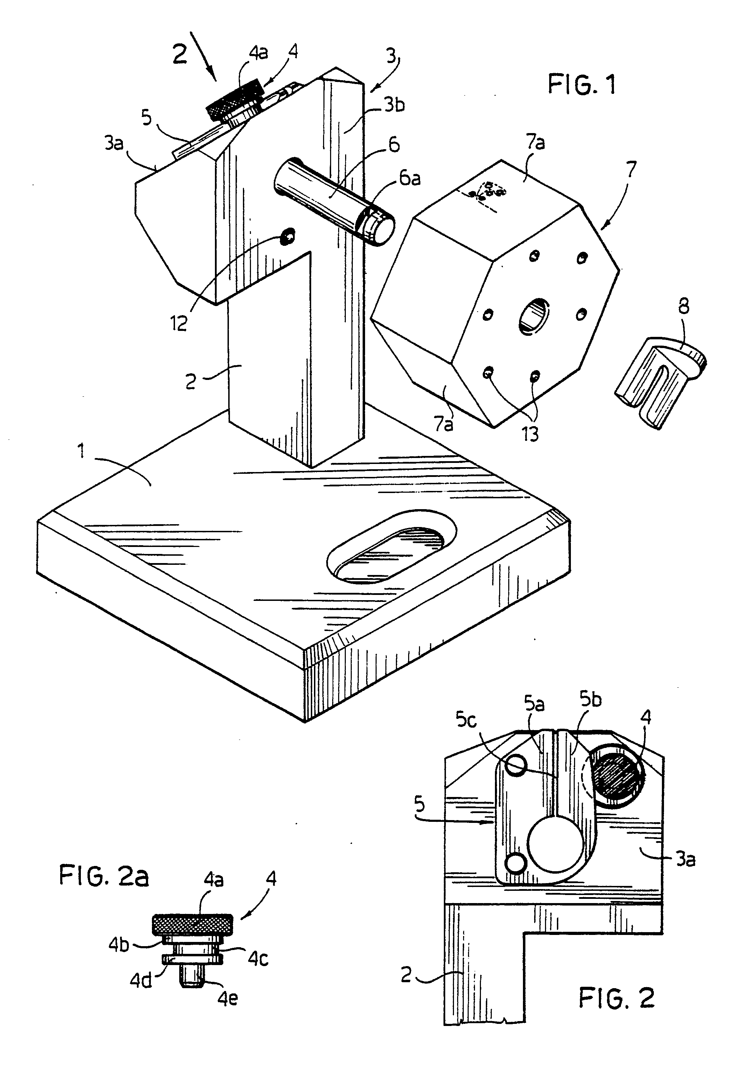

With reference to figures 1 and 2, it will be noted that the equipment according to the present invention consists of a square plan base 1, to the top of which an upright 2 is joined, carrying a head 3 on its upper end. The head 3 is prism-shaped and has a surface 3a, turned towards the outside of the base 1, inclined at 45° from the vertical. Towards the inside of the base 1, however, the head 3 has a surface 3b perpendicular to the base 1. The surface 3a has a blind hole into which an eccentric pin 4 is inserted. A vice 5, in which the wire is clamped during bending, is positioned sideways to the eccentric pin. The eccentric pin 4 can be seen more clearly in figure 2a. It consists of a knurled head 4a, an upper portion 4b, and eccentric portion 4c, an intermediate portion 4d with a diameter equal to that of the portion 4b, and a pin 4e. The portion 4d and the pin 4e are inserted into the blind hole made in the surface 3a, while the portions 4b and 4c and the head 4a are projecting.

The vice 5 has two arms 5a and 5b, between which an air space 5c is defined, into which the wire to be bent is inserted. When the vice 5 is joined to the surface 3a, for example by means of screws, the arm 5b is inserted between the portions 4b and 4d of the eccentric pin 4; consequently the clamping of the vice 5 determines the clamping of the eccentric pin 4 also, inside the corresponding hole on the surface 3a. When the knurled head 4a of the eccentric pin 4 is rotated manually by the operator, the eccentric portion 4c of the pin 4 moves to press against the arm 5b of the vice 5 and causes the clamping of the wire. By further rotating the head 4a, the pressure on the arm 5b is lessened and the wire is released.

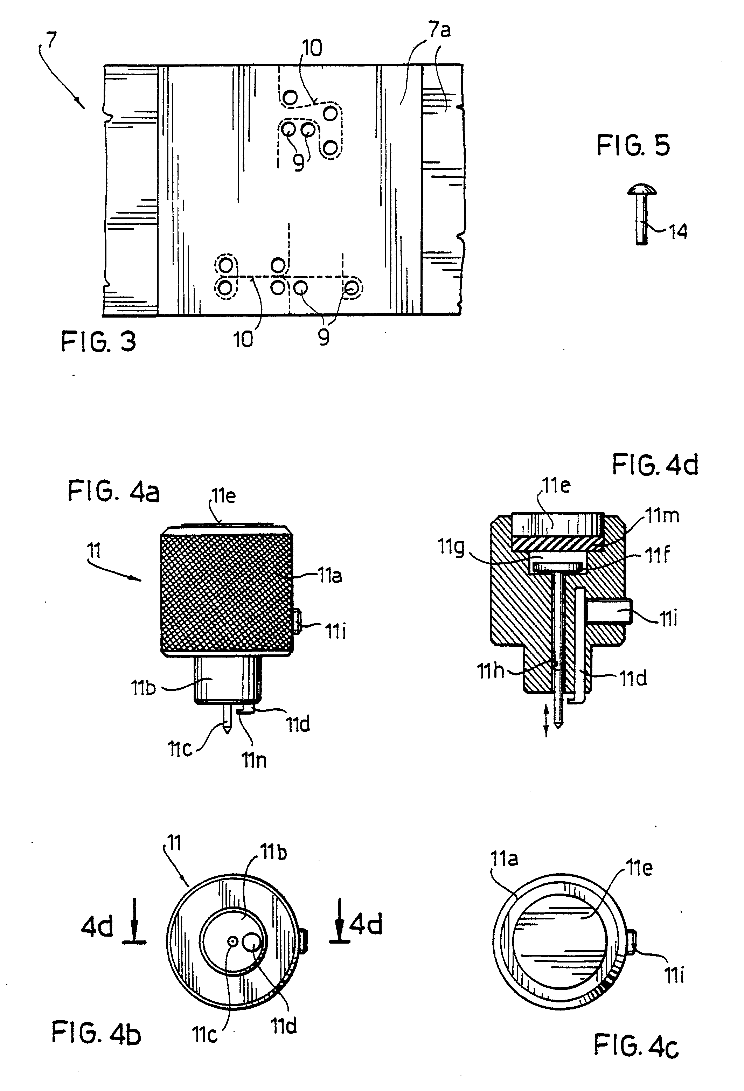

With reference again to figure 1, it will be seen that a cylindrical pin 6 projects from the central part of the surface 3b, positioned parallel to the plane of the base 1 and perpendicular to the surface 3b itself. The pin 6 has a pair of notches 6a near its free end, positioned on one side and the other along the diameter of the pin 6. On the pin 6 a drum 7 is inserted, which is shown with hexagonal section in figure 1, but which can have any number of surfaces or faces 7a; one or two wire bending outlines are engraved on each of these faces (see figure 3). The drum 7 can be mounted onto the pin 6, either in the position shown or inverted, i.e. rotated through 180° with respect to a vertical axis, according to the bending outline which it is desired to select. The drum 7 has a width smaller than the length of the pin 6, so that the end portion of the latter, with the notches 6a, projects from the drum 7. The extraction of the drum 7 from the pin 6 is prevented by inserting a fork 8 into the notches 6.

A ball 12 projects from the surface 3b of the head 3, positioned below the pin 6. Correspondingly, the drum 7 has a plurality of holes 13 in its base surfaces, with a diameter slightly smaller than that of the ball 12, equal in number to the number of faces 7a and positioned on the centre line of the same. The drum 7, once inserted onto the pin 6 and locked with the fork 8, is free to rotate around the pin 6; in the course of the said rotation, every time the drum 7 comes into position with a face 7a turned upwards, the ball 12 partially enters the corresponding hole 13, located near the face 7a opposite the one turned upwards, forming an angular reference and allowing the drum 7 to be positioned correctly. If desired, the rotation of the drum can be carried out by exerting light pressure in a clockwise or anticlockwise direction.

With reference again to figure 3, which shows a face 7a of the drum 7 in detail, it can be seen that a plurality of blind holes 9 have been made on it; on the face 7a lines 10 have also been engraved, representing wire bending outlines. The bending is carried out by means of a tool 11, shown in the figure from 4a to 4d. This consists of a knurled concave head 11a, with a cylindrical shank 11b projecting from it below, from which a retractable needle 11c and a pawl 11d project, in their turn. The lower end of the pawl 11n is shaped so that it has a radial projection turned towards the needle 11c, to ensure a better grip on the wire. A magnet 11e, whose function will be explained later, is inserted into the upper surface of the head 11a. Below the magnet 11e a plate 11m is positioned, made of material with is insulating from the electromagnetic point of view. As will be seen from figure 4d, the needle 11c has a head 11f, inserted into the upper portion 11g of a hole inside the tool 11; the lower portion 11h of the said hole having a smaller diameter, which is slightly larger than that of the needle 11c. The needle 11c is free to slide vertically inside the portions 11g and 11h of the hole.

Sideways to the needle 11c, as has already been said, a pawl 11d is positioned, which is locked in the required vertical position by acting on a dowel 11i, inserted into a corresponding threaded hole made inside the side wall of the head 11a. The pawl 11d is extracted as far as required on the basis of the dimensions of the wire to be bent, which, usually, is of between 0.2 and 0.7 mm in diameter.

Bending is carried out in the following manner: the wire is gripped in the vice 5 in such a way that its free end projects and rests on the face 7a of the drum containing the preselected bending outline. The wire is laid along the first length of the line 10 representing the bending outline. The needle 11c of the tool 11 is then inserted into the first of the holes 9, so that the wire penetrates the air space between the needle 11c and the pawl lid. The head 11a is rotated manually by the operator, drawing with it, as it rotates, the wire, which is then bent. When the wire is brought to coincide with the next length of the line 10, the needle 11c is extracted and a peg 14 is inserted in its place into the first hole 9, shown in figure 5, serving to keep the bent wire in position. The needle 11c is then inserted into the next hole 9 and the bending operation is repeated for the number of times needed to shape the wire according to the line 10 preselected. At the end of the bending operation, when the wire is required to be taken away, the pegs 14 must first be extracted, which is made easier by the presence of the magnet 11e in the head 11a of the tool 11. In fact, they can be extracted without any difficulty by resting the magnet 11e on the head of the pegs 14. The function of the insulating plate 11m is to prevent the magnetic field of the magnet lie from exerting influence on the wire.

As will be seen in figure 3, the line 10 also makes complete or 360° bends, which bring the end of the wire which comes out of the bend to overlap the end of the in-coming wire. To allow this type of bends, the needle 11c has been made retractable: when the 360° bend is almost completed and it is necessary to raise the end of the wire so that it overlaps the in-coming end, the head 11a of the tool 11 is lifted while the needle 11c remains with its point inserted in the hole 9 (because of the narrow tolerance which exists between the internal diameter of the hole and the external diameter of the needle 11c) and is brought into the extracted position, with its head 11f butting against the lower surface of the portion 11g of the hole inside the tool 11. The wire, being constrained inside the air space between the needle 11c and the pawl 11d, is also raised together with the head 11a, so that the bend may be completed.

In this way, equipment has been realized which achieves the aforesaid aims; in fact it foresees grouping all the bending outlines used for a determined work on the same drum, which is mounted once and for all; it also allows 360° bends to be carried out and foresees a simple device for extracting the locking pegs.

## Claims

1. Equipment for carrying out bends on wires for orthodontics, comprising: a vice (5) for the wire, joined to the head (3) of the equipment; a plurality of surfaces or faces (7a) each having a plurality of holes (9) positioned along lines (10) which represent the required bending outlines, the said faces (7a) being positioned adjacent to the said vice (5); a tool (11) from whose lower end a needle (11c) projects, suitable for penetrating into the said holes (9) and for rotating in them, and a pawl (11d), positioned at a certain distance from the said needle (11c), so as to realize an air space into which the said wire can penetrate; a series of pegs (14) suitable for locking the bends of the wire once they are realized; characterized in that the tool (11) has an internal hole consisting of portions (11g, 11h), inside which the needle (11c) slides, and that the said pawl (11d) is provided with a radial projection (11n) turned towards the needle (11c).

2. Equipment according to claim 1, characterized in that the axial position of the pawl (11d) can be regulated by acting on a dowel (11i) inserted into a corresponding threaded hole made in the side wall of the head (11a) of the tool (11), so as to vary the height of the air space defined between the pawl (11d) itself and the needle (11c) according to the diameter of the wire to be bent.

3. Equipment according to claim 1 or 2, characterized in that in the upper surface of the head (11a) of the tool (11) a magnet (11e) is inserted suitable for facilitating the extraction of the pegs (14) from the holes (9).

4. Equipment according to any one of the previous claims, characterized in that the faces (7a) bearing the holes (9) positioned along the lines (10), which represent the bending outlines, form the side surfaces of a drum (7), capable of being rotated around a pin (6) projecting from the surface (3b) of the head (3) of the equipment and perpendicular to it.

5. Equipment according to claim 4, characterized in that a locking system is foreseen for the angular position of the drum (7).

6. Equipment according to claim 5, characterized in that the said locking system consists of a ball (12) projecting from the surface (3b) of the head (3) of the equipment, suitable for being partially inserted inside the holes (13) made in the base surfaces of the said drum (7), below the centre axis of each face (7a).

FIG. 1

FIG. 2a

FIG. 2

FIG. 3

10

7

7a

9

10

9

FIG. 5

14

FIG. 4a

11e

11

11a

11i

11b

11c

11n

11d

FIG. 4d

11e

11m

11g

11f

11i

11h

11d

FIG. 4b

11

11b

4d

4d

11c

11d

FIG. 4c

11a

11e

11i

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | EP-A-0 041 258 (DRISALDI)<br>* Description; figures * | 1 | A 61 C 7/02 |

|  |  |  | TECHNICAL FIELDS SEARCHED (Int. Cl.5) |
|---|---|---|---|
|  |  |  | A 61 C<br>B 21 F |

The present search report has been drawn up for all claims

| Place of search | Date of completion of the search | Examiner |
|---|---|---|
| THE HAGUE | 26-06-1990 | VANRUNXT J.M.A. |